# EUROPEAN PATENT SPECIFICATION

(11) **EP 1 310 631 B1**
(45) Date of publication and mention of the grant of the patent: **28.06.2006**
(21) Application number: 02291077.2
(22) Date of filing: 29.04.2002
(51) Int. Cl.: E21B 47/04, G01F 23/26, G01F 23/24

(54) **Apparatus and method for locating a fluid interface**
Vorrichtung und Verfahren zum Bestimmen der Lage einer Grenzschicht zwischen zwei Flüssigkeiten
Système et procédé de contrôle de la position d'une interface entre deux fluides

(30) Priority: 26.05.2001 GB 0112934
(43) Date of publication of application: 14.05.2003
(73) Proprietor: SERVICES PETROLIERS SCHLUMBERGER, 75007 Paris (FR); SCHLUMBERGER HOLDINGS LIMITED, Road Town, Tortola (VG); SCHLUMBERGER TECHNOLOGY B.V., 2514 JG Den Haag (NL)
(72) Inventor: Schmitt, Jacques, 75011 Paris (FR)
(74) Representative: Hyden, Martin Douglas

(56) References cited:
- DD-A- 140 683
- DE-A- 2 621 142
- DE-A- 2 829 857
- DE-A- 3 824 663
- DE-A- 4 121 796
- DATABASE WPI Section Ch, Week 198547 Derwent Publications Ltd., London, GB; Class H01, AN 1985-294581 XP002267012 & SU 1 154 447 A (IVANO-FRANK OIL RES), 7 May 1985 (1985-05-07)

## Description

### Field of the Invention

The present invention relates to the monitoring of the location of the interface between two different fluids. In particular, the invention provides new techniques for the permanent location of the fluid interface between two fluids with different resistivities, for example during the drilling of a cavern in the underground formations, in order to store energy therein.

### Background

It is known in the art to store energy, for example natural gas, in underground cavities in salt formations. Cavities can be made in salt formations by dissolving the salt using water and then removing the resulting brine. As the salt formations are impermeable to natural gas and offer a good resistance to internal pressure, it is possible to store natural gas under pressure in these cavities.

A known technique to build up gas storage caverns of precisely controlled geometry consists in injecting water from the surface in a tubing, circulating said water in the salt formation and returning the brine to the surface in the annulus between said tubing and a string. In this method, a diesel cushion is kept between the oversatured brine and the surface in order to control the water level in real time. Monitoring in real time the depth of the brine/diesel interface thus controls the cavern shape. The known interface monitoring method involves a density measurement with a nuclear logging tool. Unfortunately, this method is incompatible with the drilling method previously explained, because of space constraints. Furthermore, due to the corrosive environment, the chemical and mechanical resistances of the interface monitoring apparatus need to be particularly reliable. Document DDA140683 discloses a retrievable installation made of an array of resistors to monitor the interface by measuring the impedance changes. Unfortunately, this apparatus does not support corrosive environment.

### Summary of the Invention

It is an object of the invention to locate the interface between two fluids of different resistivities.

The location of said interface is achieved by deploying an array of electrodes in the fluids of different resistivities. In a preferred embodiment, the network comprises a set of passive electrical electrodes evenly spaced and connected in series, a fixed resistor being inserted in this array between each electrode and the next one. As the electrodes are in contact with the fluids, any conductive fluid will short-circuit the electrical resistance between two consecutive electrodes and consequently decrease the total resistance of global electrical circuit. A permanent measurement of said total resistance will thus provide the depth of the interface. This method will be very efficient to determine the interface level between a conductive fluid (for example brine or water) and a non-conductive fluid (for example oil or diesel).

In a preferred aspect, the electrodes network and the electrical cable connecting said electrodes to each other are encased in a highly corrosion resistant vessel, all parts being welded. The installation is thus designed with a very high level of reliability, as it must be operational for continuous applications.

The present invention provides an installation for locating the interface between two fluids of different resistivities, said fluids being located in an underground formation, said installation comprising:
- at least two pressure vessel bodies comprising each at least two electrodes and a resistor, said resistor being connected to said two electrodes;
- an encased permanent electrical cable connecting in series resistor of each pressure vessel body, all parts being welded;
- a resistance meter electrically connected to said encased permanent electrical cable;
wherein each electrode is insulated from the pressure vessel body with an insulating material providing a permanent seal between the inside of the vessel and said fluid; in such a way that only the electrodes are in contact with the fluid.

In a preferred embodiment, the vessel body is a highly corrosion resistant vessel. And in another preferred embodiment, the pressure vessel is shaped in such a way that each pressure vessel can be introduced in an annular space between a tubing and a casing in a well.

### Brief Description of the Drawings

Figure 1 shows schematically the setup of a salt cavern drilling operation of the type to which the present invention relates;
Figure 2 shows a schematic of the installation according to one embodiment of the invention;
Figure 3 shows a schematic of an electrode in an installation according to one embodiment of the invention;
Figure 4 shows a schematic of a part of an electrical cable in an installation according to one embodiment of the invention; and
Figure 5 shows schematic of the electrical circuit according to the installation of figure 2.

### Description of the Preferred Embodiments

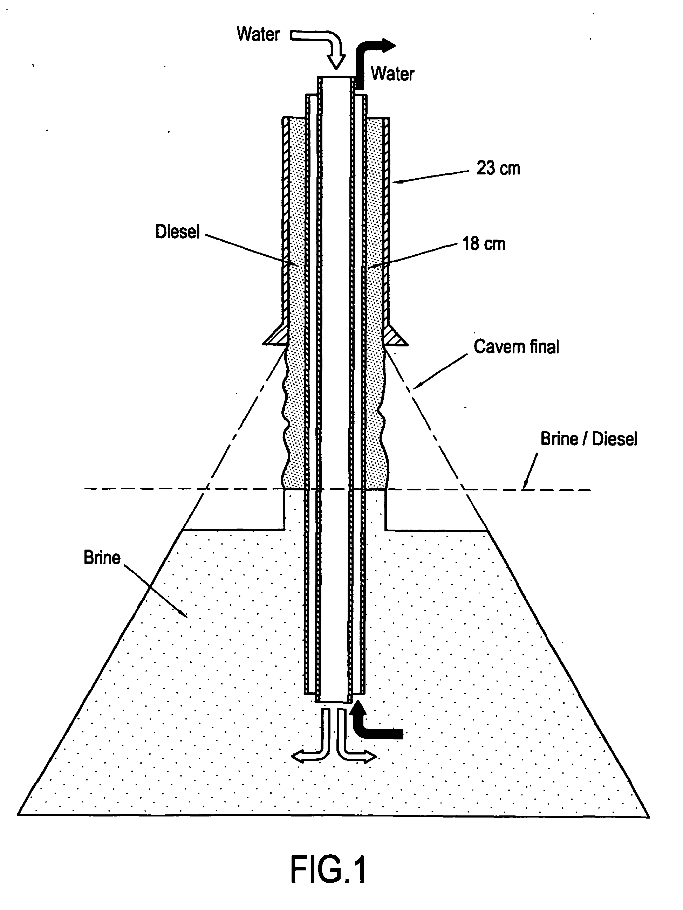

Figure 1 shows schematically the manner in which a salt cavern suitable for gas storage can be formed. A borehole is drilled into the salt formation and cased (23 cm = 9 5/8 inches casing) to a point level with the desired top of the cavern. Tubing (18 cm = 7 5/8 inches tubing) is lowered into the well and a delivery tubing positioned inside the tubing. The annulus between the tubing and the well is then filled with diesel. Water is pumped to the well bottom through the delivery tubing where it dissolves the salt and returns to the surface via the 18 centimeters (7 5/8) tubing. The presence of the diesel cap over the water layer prevents the cavern extending vertically too fast and so allows radial development of the cavern to define a useful shape and volume. The brine diesel interface therefore corresponds to the vertical extent of the cavern.

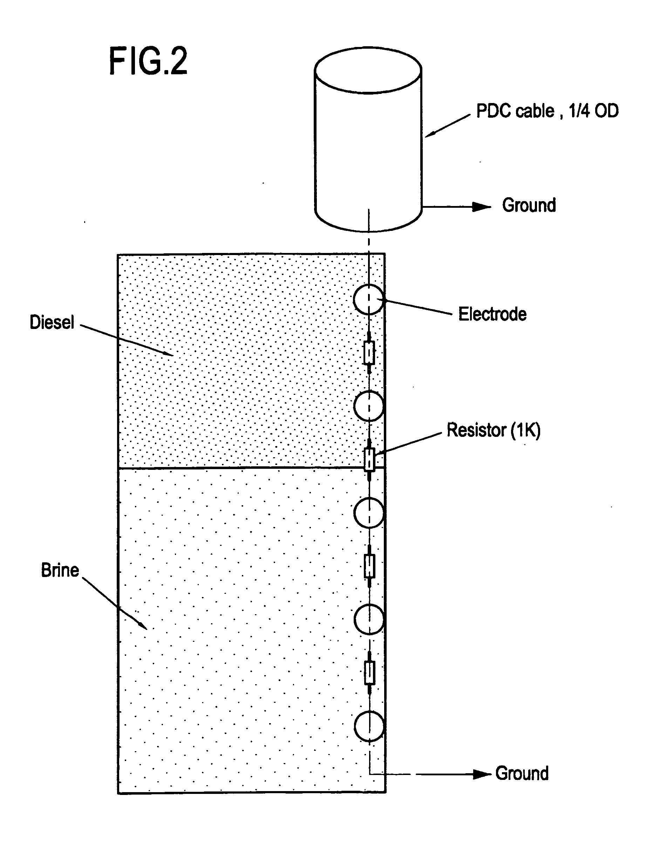

Figure 2 represents a schematic of an installation according to one embodiment of the invention. In this figure, said installation aims at locating the fluid interface between a salt saturated brine layer and a diesel layer, said brine layer being situated under said diesel layer, due to their density differences. The brine layer and the diesel layer are located in an underground formation. In the preferred embodiment of the invention, a metal casing covers the walls of said underground formation. Generally, the installation of the invention can locate the interface between any fluids of different resistivities.

The installation being the subject of this invention is composed of the following items, described below as they will appear from the bottom of the underground formation to the surface:
- an array of at least two electrodes along the cavern area. For example, if the cavern is approximately 160 m. high, 6 electrodes evenly spaced every 10 meters could cover the bottom 60 meters followed by 20 electrodes evenly spaced every 10 meters. The electrodes are electrically and mechanically linked with a permanent downhole encased cable.
- a permanent downhole encased cable to link the array of the electrodes to the surface.
- a computerized PC based resistance meter that is known in the state of the art.

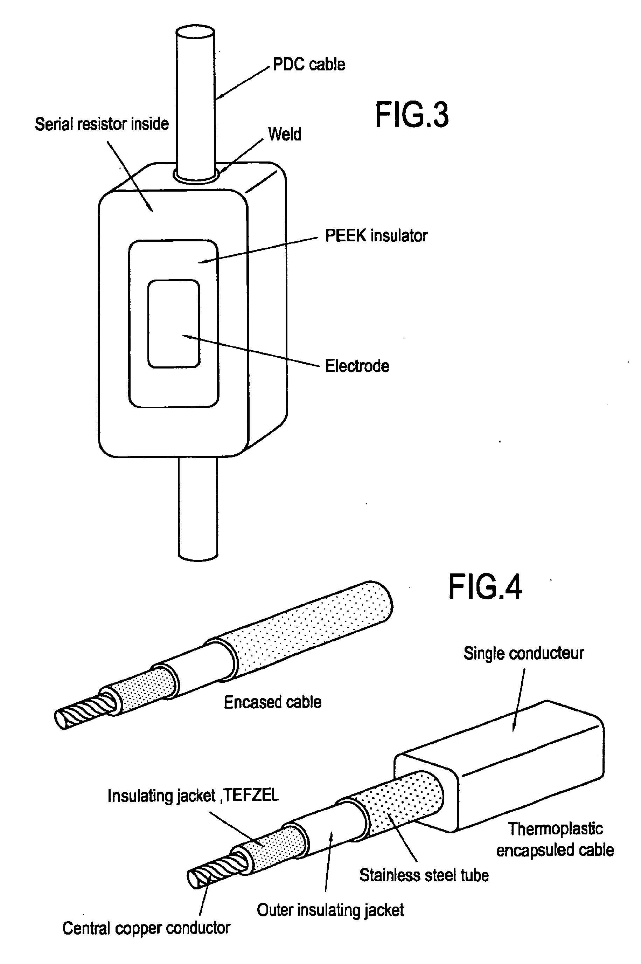

According to figures 3 and 4, each component of the system can be described as follows:
1. The electrodes array: the array must be designed with a very high level of reliability as it must be operational for example during the whole duration of the drilling of a salt cavern (that between 4 to 8 years) in a relatively aggressive environment, the salt brine. To achieve this reliability, the electrical cable and the network of electrodes will be encased in a highly corrosion resistant vessel, all parts being welded.
   Each electrode is placed in the center of the vessel, facing the fluids of different resistivities and insulated from the pressure vessel body with an insulating material providing a permanent seal between the inside of the vessel and said fluids. The electrodes material will be selected to be resistant to the different type of fluids which interface need to be located, for example diesel and over-saturated salt brine.
   The pressure vessel will be connected to the permanent downhole cable on both ends and will include a resistor (approximately 1 Kohm) connected in series. The electrodes only are in contact with the fluids, the resistor being protected from the fluid by a pressure vessel.
   When the installation according to the invention is used in a downhole well covered by a metal casing in which a tubing has been concentrically inserted, the pressure vessel is shaped in such a way that it can be introduced in the annular space between the tubing and the casing, hence its thickness should not exceed the annular space while maintaining a certain pressure rating. For example, if the vessel is situated in an annular space between a 18 centimeters (= 7 5/8 inches) tubing and a 23 centimeters (=9 5/8 inches) casing (said dimensions being the one commonly used while drilling salt cavern), hence its thickness should not exceed 10 cm while maintaining a pressure rating of 300 Bars.
2. The cable : the cable needs to be encased in a highly corrosion resistant material. For example, the cable consists of a wire insulated with Tefzel encased in a ¼ inch OD Incoloy tube (said cable being known in the state of the art).
3. The surface equipment: It is basically a known multimeter interfaced to a personal computer to display the impedance and the interface depth as a function of time.

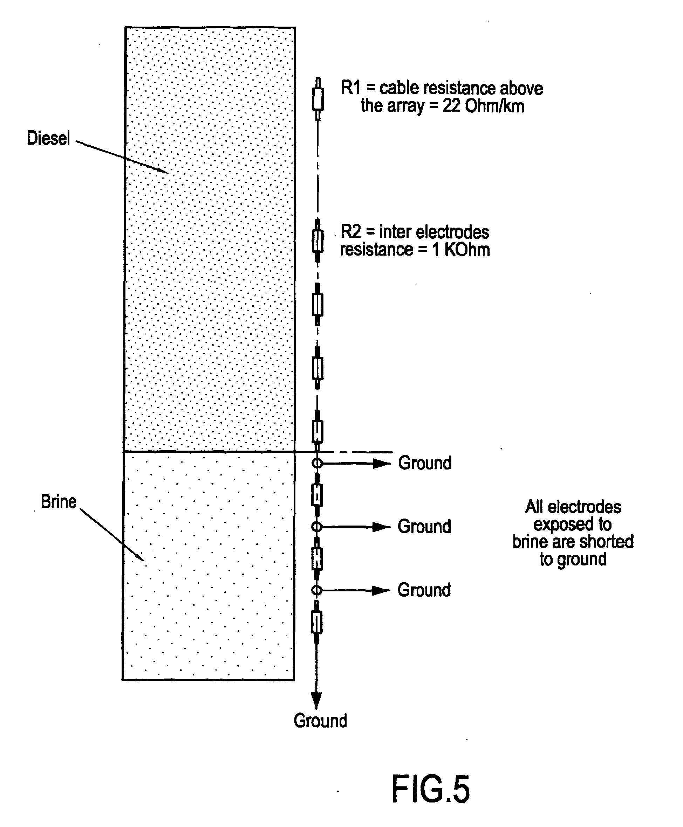

As represented on figure 5, the installation according to the invention creates an electrical circuit that permits to locate the interface between two fluids of different resistivities. As the electrodes are in contact with the fluids, any conductive fluid will short-circuit the electrical resistance between two consecutive electrodes and decrease the total resistance of the electrical circuit. A permanent measurement of this total resistance will provide the depth of the interface. Consequently, in an application with brine and diesel, as by nature the two fluids are segregated in the well, with the brine at the bottom and the diesel on top, a simple measurement of the total electrical resistance of the array will provide the depth of the interface.

## Claims

1. An installation for locating the interface between two fluids of different resistivities, said fluids being located in an underground formation, said installation comprising:
- a pressure vessel body comprising at least two electrodes and a resistor, said resistor being placed between said two electrodes;
- a permanent downhole encased electrical cable connecting in series said electrodes and resistor, all parts being welded;
- a resistance meter electrically connected to said permanent downhole encased electrical cable;
wherein each electrode is placed in the center of the pressure vessel body, facing the fluids of different resistivities and is insulated from the pressure vessel body with an insulating material providing a permanent seal between the inside of the vessel and said fluids.

2. The installation of claim 1, wherein the pressure vessel body is a highly corrosion resistant vessel.

3. The installation of claim 1 or 2, wherein the pressure vessel body is shaped in such a way that said pressure vessel body can be introduced in an annular space between a tubing and a casing in a well.

## Patentansprüche

1. Anordnung zur Lokalisierung der Grenzfläche zwischen zwei Fluiden unterschiedlichen spezifischen Widerstands, wobei sich die Fluide in einer unterirdischen Formation befinden, und wobei die Anordnung umfasst:
- einen Druckbehälterkörper umfassend mindestens zwei Elektroden und einen Widerstand, wobei der Widerstand zwischen den zwei Elektroden angeordnet ist;
- ein dauerhaft untertägiges ummanteltes elektrisches Kabel, das in Reihe mit den Elektroden und dem Widerstand verbunden ist, wobei alle Teile verschweißt sind;
- einen elektrisch mit dem dauerhaft untertägigen ummantelten elektrischen Kabel verbundenen Widerstandsmesser;
wobei jede Elektrode in der Mitte des Druckbehälterkörpers den Fluiden unterschiedlicher spezifischer Widerstände zugewandt angeordnet ist und von dem Druckbehälterkörper isoliert ist durch ein Isoliermaterial, das eine dauerhafte Dichtung zwischen dem Inneren des Behälters und den Fluiden schafft.

2. Anordnung nach Anspruch 1, wobei der Druckbehälterkörper ein hochkorrosionsbeständiger Behälter ist.

3. Anordnung nach Anspruch 1 oder 2, wobei der Druckbehälterkörper in solcher Weise geformt ist, dass der Druckbehälterkörper in einen ringförmigen Raum zwischen einem Steigrohr und einem Futterrohr in ein Bohrloch einführbar ist.

## Revendications

1. Installation de localisation de l'interface entre deux fluides de résistivités différentes, lesdits fluides étant situés dans une formation souterraine, ladite installation comprenant :
- un corps formant récipient sous pression comprenant au moins deux électrodes et une résistance, ladite résistance étant placée entre lesdites électrodes ;
- un câble électrique gainé de fond permanent raccordant en série lesdites électrodes et ladite résistance, tous les composants étant soudés ;
- un mesureur de résistance raccordé électriquement audit câble électrique gainé de fond permanent ;
chaque électrode étant placée au centre du corps formant récipient sous pression, en regard des fluides de résistivités différentes, et étant isolée du corps formant récipient sous pression par une matière isolante formant un joint d'étanchéité entre l'intérieur du corps formant récipient sous pression et lesdits fluides.

2. Installation selon la revendication 1, le corps formant récipient sous pression étant un récipient hautement résistant à la corrosion.

3. Installation selon la revendication 1 ou 2, le corps formant récipient sous pression étant doté d'une forme permettant son introduction dans un espace annulaire entre une colonne de production et un cuvelage dans un puits.
